(19) **Europäisches Patentamt**
**European Patent Office**
**Office européen des brevets**

(11) **EP 2 093 951 B1**

(12) **EUROPEAN PATENT SPECIFICATION**

(45) Date of publication and mention
of the grant of the patent:
**19.12.2012 Bulletin 2012/51**

(51) Int Cl.:
**H04L 12/56** *(2006.01)*

(21) Application number: **08003208.9**

(22) Date of filing: **21.02.2008**

(54) **Method and device for processing multimedia data and communication system comprising such device**

Verfahren und Vorrichtung zur Verarbeitung von Multimediadaten und Kommunikationssystem mit einer derartigen Vorrichtung

Procédé et dispositif de traitement de données multimédia et système de communication comprenant un tel dispositif

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**26.08.2009 Bulletin 2009/35**

(73) Proprietor: **Nokia Siemens Networks Oy**
**02610 Espoo (FI)**

(72) Inventors:
• **Groos, Gerd**
**81377 München (DE)**

• **Kopilovic, Ivan, Dr.**
**81669 München (DE)**
• **Wagner, Marcel, Dr.**
**81667 München (DE)**

(74) Representative: **Bruglachner, Thomas E.**
**Nokia Siemens Networks Oy**
**COO RTP IPR / Patent Administration**
**80240 Munich (DE)**

(56) References cited:
**EP-A- 1 523 171**      **EP-A- 1 670 252**
**US-A1- 2006 036 759**

**Description**

The invention relates to a method and to a device for processing multimedia data and to a communication system comprising such a device.

Digital video broadcasting (DVB) improved the analogue television system in various ways. For example, the bandwidth required for the transmission of a single television channel has been significantly reduced, i.e. 4 DVB channels can be sent instead of one analogue television channel.

However, DVB bears the disadvantage that a user has to wait a significant period of time after s/he triggered a channel change request. In analogue television, the channels change almost immediately, whereas in DVB the time until a new channel can be displayed with full audio/video synchronization may be more than 1 second, which may lead to an annoying watching or zapping experience for the viewer.

This problem of long channel switching time is based on the encoding of digital video and it has an impact on all digital technologies including IPTV.

In the publication EP-A-1 670 252 (MICROSOFT CORP [US]) 14 June 2006 (2006-06-14)accelerated channel change strategies are described for supplying a client module with media information by transitioning between a first delivery of media information provided by first delivery functionality and a second delivery of media information provided by second delivery functionality without exceeding prescribed data rate limitations, wherein the first delivery functionality can represent server-based functionality for delivering a unicast stream of media information at a data rate or maximum data rate of some excess amount over the nominal rate of delivery, starting at a selected location within the media information.

A digital video comprises a sequence of pictures. For example, in PAL television systems, each picture has 720x576 pixels and a video comprises 25 pictures per second. Video compression methods (like MPEG-2 or H.264) exploit dependencies between subsequent pictures. The change from one picture to the next picture is predicted and the prediction error is encoded. To allow random access, this prediction chain is subdivided into regular intervals to which so-called key pictures (or key frames) are inserted. Said key pictures are pictures that are not based on predicted information so that they can be decoded independently from other (preceding) pictures.

As a consequence, a set-top-box (STB) tuning into a TV channel has to wait for the next key picture. To reduce this waiting time, key pictures are inserted at short intervals. A typical key picture time interval in DVB amounts to 0.5 seconds, which means that an average time for the STB to wait for the next key picture is 0.25 seconds.

In network based video broadcasting applications like IPTV, the video is conveyed to the users via multicast. The users may be connected to the network via different access technologies, e.g., xDSL, cable, fiber, satellite, etc. Each user has a certain available peak bandwidth. In such a scenario, the TV channel is encoded to match the worst case requirements of the user with a minimum access bandwidth R. The video encoder has to maximize the quality of the video regarding this minimum bandwidth constraint.

Due to the predictive nature of the encoding, the size of the pictures encoded may vary and key pictures lead to high peaks in the bit rate (i.e. require a high portion of bandwidth as these key pictures are not compressed or part of said predictive encoding). To meet the overall bandwidth requirement R (the minimum access bandwidth available in the particular scenario), the encoder needs to smoothen such peaks, i.e. to distribute the peaks of high bandwidth over time. Such rate smoothing typically involves buffering, i.e., after reaching a key picture position, the receiver (e.g., said STB) buffers a certain amount of time before starting the decoding. This buffering time is a encoding parameter that is preferably signaled by the encoder. To meet a given video quality level, the encoder has to adapt the encoding parameters in such way that they match the bandwidth limit R:

- for a small bandwidth limit R, a long buffering is needed to reach a given level of quality;
- for a large bandwidth limit R, a short buffering suffices to provide a given level of quality.

In an exemplary IPTV system, a average STB buffering amounts to 1.2 seconds, which means that the receiver (e.g., the STB) has to wait 1.2 seconds after a channel change request before it is provided with all the necessary information to start the play-out.

Hence, there are two major parameters influencing the channel changing time:

(1) the average time to the position of the next key picture ($T_K$);

(2) the buffering time ($T_B$).

Since said time $T_K$ and said time $T_B$ are determined by the encoder, they are inherent to the broadcasted video. As a consequence, an overall channel change time T for a STB to wait for a subsequently selected multicast channel to be played amounts to:

$$T = T_K + T_B.$$

The problem to be solved is to overcome the disadvantages stated before and to provide an efficient approach that allows significantly reduced channel switching times in digital video applications.

This problem is solved according to the features of the independent claims. Further embodiments result from the depending claims.

In order to overcome this problem, a method is provided for processing multimedia data, wherein first multimedia data is converted into second multimedia data such that a receiving network element of the second multimedia data utilizes a receiver buffering of a reduced duration.

This advantageously enables to reduce the buffering at said receiving network element and hence reduce a channel switching time. The service provided advantageously utilizes the fact that a connection to the receiving network element has a higher bandwidth than a minimum access bandwidth R.

In an embodiment, said first multimedia data and/or second multimedia data comprises:

- video data;
- audio data;
- service data;
- signaling data.

According to a further embodiment, said first multimedia data and/or said second multimedia data is conveyed via a point to multipoint delivery mechanism, in particular via multicast or broadcast.

It is to be noted that the data mentioned above, in particular said video data, is sent and received via a point to multipoint (multicast or broadcast) network delivery mechanism.

In another embodiment, said first multimedia data and/or second multimedia data comprises compressed data, in particular according to a H.26x or MPEG standard.

The first multimedia data and/or the second multimedia data may in particular comprise streaming video data.

In a further embodiment, signaling information of the first multimedia data is converted into signaling information of the second multimedia data.

Such signaling information can be utilized to set up a receiving buffer size. Standardized signaling mechanisms may be used for such purpose (e.g., MPEG2 transports streams or real-time transport protocol (RTP) streams) and may be utilized to adjust, configure and/or model the receiver buffering times, e.g., buffer times used at a receiver. This approach may advantageously remodel the receiver buffering in order to reduce the necessary buffering times and thus changes the signaling information for the second multimedia data accordingly.

In a next embodiment, the signaling information of the second multimedia data indicates a higher bit rate than the bit rate of the first multimedia data.

Hence, the second multimedia data conveyed to the receiving network element utilizes the fact that such data can be conveyed at a faster data rate thereby meeting the timing requirements of the data stream without any need for long buffering at the receiving network element. Preferably, the multimedia data itself does not have to be transcoded, only the signaling is adjusted in order to exploit properties of the connection towards the receiving network element more efficiently.

It is also an embodiment that said first multimedia data is conveyed and/or received at a constant bit rate.

Pursuant to another embodiment, said second multimedia data is conveyed and/or received at a variable bit rate.

Thus, the data conveyed to the receiving network element may be of variable bit rate, in particular utilizing a high bandwidth and hence a low buffering time at the receiving network element.

According to an embodiment, the buffer size at the receiving network element is adjusted via said second multimedia data, in particular via signaling information provided and/or associated with said second multimedia data.

According to another embodiment, the second multimedia data is conveyed to an access point, in particular to a DSLAM.

The second multimedia data may in particular be conveyed via a digital subscriber line (DSL, VDSL, ADSL and all derivates thereof) or via a passive optical network (PON, GPON, etc.).

In yet another embodiment, the first multimedia data is forwarded to the receiving network element without conversion if the receiving network element is not capable of processing a high or variable bit rate.

Hence, there is the possibility to plainly forward the first multimedia data in case the connection towards the receiving network element is (temporarily) not capable of processing a higher bit rate (compared to the bit rate of the first multimedia data received). In such case, the incoming data may be handed over towards the receiving network element.

According to a next embodiment, the receiving network element is an access point, a user terminal or a set top box. In particular, the user may be reached via an access point (DSLAM, GPON access point, xDSL access point).

The problem stated above is also solved by a device for processing multimedia data comprising a processor unit and/or a hard-wired circuit and/or a logic circuit that is equipped and/or arranged such that the method as described herein is executable thereon.

According to an embodiment, said device is or is associated with or comprises a communication device, in particular a network element for adjusting a bit rate for said multimedia data to be conveyed to at least one user.

The problem stated supra is further solved by a communication system comprising the device as described herein.

Embodiments of the invention are shown and illustrated in the following figures:

Fig.1 shows a D-Shaping Server concept in a scenario providing video streams at various data rates from a video head end via a core network towards different users;

Fig.2   visualizes a duality between buffering and bandwidth;

Fig.3   shows an exemplary implementation of a D-Shaping Server comprising a network interface connected to a demultiplexer, the output of which is forwarded to a buffer, in particular to different portions of said buffer, e.g., elementary stream buffers, and the buffered streams are multiplexed by a multiplexer to an output data stream provided via a network interface towards a respective access point;

Fig.4   shows an exemplary message flow in a network scenario, wherein a video head end provides streaming data via a core network and a VDSL aggregation to a D-Shaping Server;

Fig.5   shows a different exemplary message flow in a network scenario according to Fig.4.

The approach provided herewith in particular allows to

(1) reduce or eliminate a channel change time portion $T_B$ based on the buffering;

(2) provide scalable video by avoiding unicast communication;

(3) support legacy set top boxes (STBs), in particular by avoiding interactions other than multicast join and leave requests.

This can be achieved by providing or deploying a (transparent proxy) server close to the access network. Such server is also referred to as a D-Shaping-Server.

The D-Shaping-Server advantageously utilizes the dualism between buffering and bit rate:

a. The encoder introduces buffering in order to smoothen a variation of the bit rate of the video pictures and to fulfill a bandwidth requirement R, i.e. an overall available minimum bandwidth;

b. The D-Shaping-Server receives a TV channel with bandwidth R and changes said smoothing by outputting a variable bit rate video which requires a reduced buffering time. The amount of reduction of the buffering time may in particular depend on the available bit rate of the access network. If the access network provides a high bit rate (e.g., VDSL or GPON) this approach may largely (in particular completely) reduce the buffering time. On the other hand, if the access network provides only the minimum bandwidth R, the D-Shaping-Server is not necessary or can be configured to just forward the regular channel with bandwidth R to the STB without signaling any reduction of the buffering time.

Advantageously, the approach suggested allows reducing or eliminating the buffering time $T_B$ depending on a peak bandwidth supported by the network. A channel change time hence depends mostly on the frequency of key pictures provided in the video stream. The channel change time for a typical broadcast scenario with two key pictures per second leads to an average channel change time amounting to 0.25 seconds.

The D-Shaping-Server receives and outputs multicast streams, therefore it can operate transparently and it may support legacy STBs. An advantage of the D-Shaping-Server concept is that it can adopt any multicast channel from a core network according to capabilities of heterogeneous access technologies.

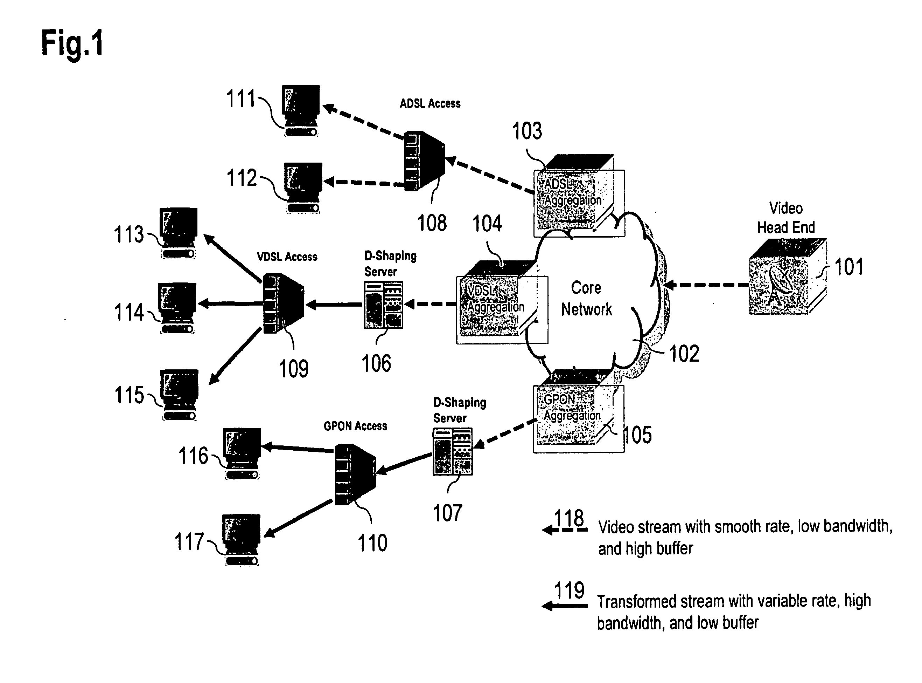

**Fig.1** shows a D-Shaping Server concept in a scenario providing video streams at various data rates from a video head end 101 via a core network 102 towards different users 111 to 117.

The core network 102 distributes the video stream 118 provided by the video head end 101 via an ADSL aggregation 103 and via an ADSL access 108 towards ADSL users 111 and 112. The core network 102 further distributes the video stream 118 via a VDSL aggregation 104 to a D-Shaping Server 106. The video stream 118 is transformed at said D-Shaping Server 106 into a video stream 119 with a variable bit rate utilizing the higher VDSL bandwidth (compared to the ADSL bandwidth) thereby allowing a reduced buffer size and hence minimize delay by switching between IPTV channels. Said video stream 119 is conveyed via a VDSL access 109 to users 113 to 115. Further, the video stream 118 is also transmitted via a GPON aggregation 105 to a D-Shaping Server 107, which transforms said video stream 118 into a video stream 119 of variable bit rate utilizing the higher bandwidth of the passive optical network and conveying said bit video stream 119 towards a GPON access 110 and further to users 116 and 117.

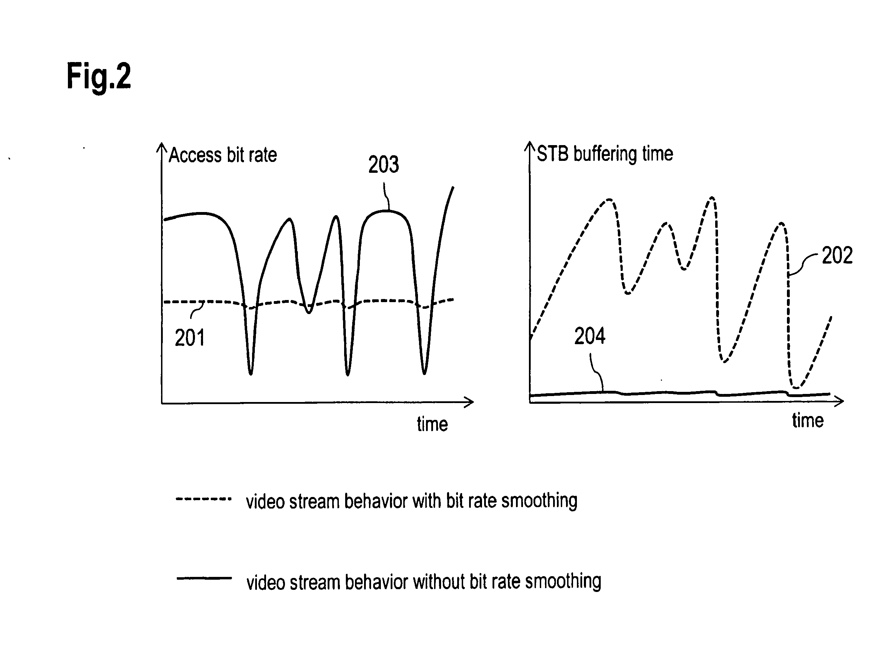

**Fig.2** visualizes a duality between buffering and bandwidth. Graphs 201 and 202 show that the encoder smoothens the variable bit rate of the video pictures in order to meet the minimum bandwidth requirement R. The STB needs to buffer before being able to start displaying the video stream. The required buffering time 202 shows large variations. Graphs 203 and 204 show that without strict bandwidth restrictions, the encoder can send the encoded pictures without bit rate smoothing. The bit rate 203 depicts large variations and high peaks. The STB does not have to buffer long except maybe for a small de-jittering buffer. The required buffering time 204 is low and it shows little variation.

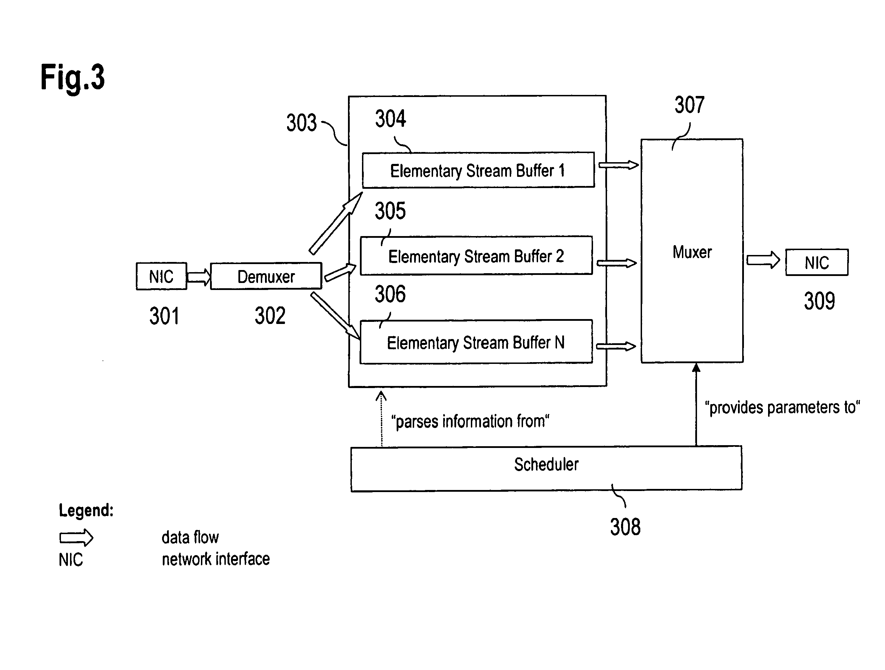

An exemplary implementation of a D-Shaping Server is shown in **Fig.3.** The D-Shaping Server comprises a network interface 301 connected to a demultiplexer 302. The output of the demultiplexer 302 is forwarded to a buffer 303, in particular to different portions of said buffer 303, e.g., elementary stream buffers 304 to 306 that may each be utilized for a particular type of data, e.g., video, audio, subtitle information, etc. The various buffered streams 304 to 306 may be multiplexed by a multiplexer 307 to an output data stream provided via a network interface 309 towards a respective access point (e.g., VDSL access 109 or GPON access 110 according to Fig.1). Further, a scheduler 308 is provided that parses information from the buffer 303, in particular from the respective elementary stream buffers 304 to 306 and provides parameters to the multiplexer 307.

The output data stream provided by the D-Shaping Server via the network interface 309 has a variable bit rate and may utilize a higher bandwidth capability of the access network.

The demultiplexer 302 may separate and redirect incoming data units into the separate elementary stream buffers 304 to 306 utilized for audio, video, teletext, etc. If such input data comprises, e.g., an MPEG-2 transport stream (MP2TS), the demultiplexer 302 separates the transport stream packets according to a packet identifier (PID) found in the packet header. In case of utilization of the Real-Time Transport Protocol (RTP), the pair "(destination user datagram protocol (UDP) port, multicast address)" can be used to identify each elementary stream.

Each elementary stream buffer 304 to 306 may be part of the buffer 303. N such elementary stream buffers may be provided.

The scheduler 308 analyses the information of the buffer 303 and may in particular for each elementary stream

- determine a model emulating displaying a channel (and the delay for displaying such channel) at the STB;
- determine a decoding time DT for each data unit (the time at which the given data unit is scheduled for decoding);
- determine delay parameters $T_{delta}$ and $T_{initial}$ based on said model.

The multiplexer 307 periodically forwards data units from the elementary stream buffers 304 to 306 and sends them towards the users via said network interface 309. In particular, after obtaining the parameters $T_{initial}$ and $T_{delta}$ from the scheduler 308, the multiplexer 307 waits a time period $T_{initial}$ before executing the following operations periodically at a period of $T_{delta}$:

- remove all data units from the elementary stream buffers 304 to 306 for which data units apply:

$$DT_{\min} \leq DT < DT_{\min} + T_{\text{delta}}$$

wherein $DT_{min}$ is the minimum decoding time of the DT values associated with the data units in the elementary stream buffers;

- modify the header of these data units and the necessary signaling information based on the parameters DT, $T_{delta}$ and $T_{initial}$;
- send these data units towards the access network within a time interval $T^*_{delta}$.

In case of MP2TS, a new MP2TS multiplex may be created and sent to the network, where the timing information in the packet headers is modified accordingly.

Utilizing RTP, the data units from each elementary stream buffer 304 to 306 are sent via different ports or multicast addresses and the new signaling information (buffering rules, e.g., in form of a session description) is transmitted towards the STB.

It is to be noted that the computation of $T_{delta}$ and $T_{initial}$ as well as the modification of the header and signaling information can be provided with no buffer underflows and overflows at the STB. In particular, the value $T^*_{delta}$ may be changed adaptively in order to respect a specified, in particular a high (or maximum) bandwidth available at the output and in order to avoid said buffer underflows and overflows.

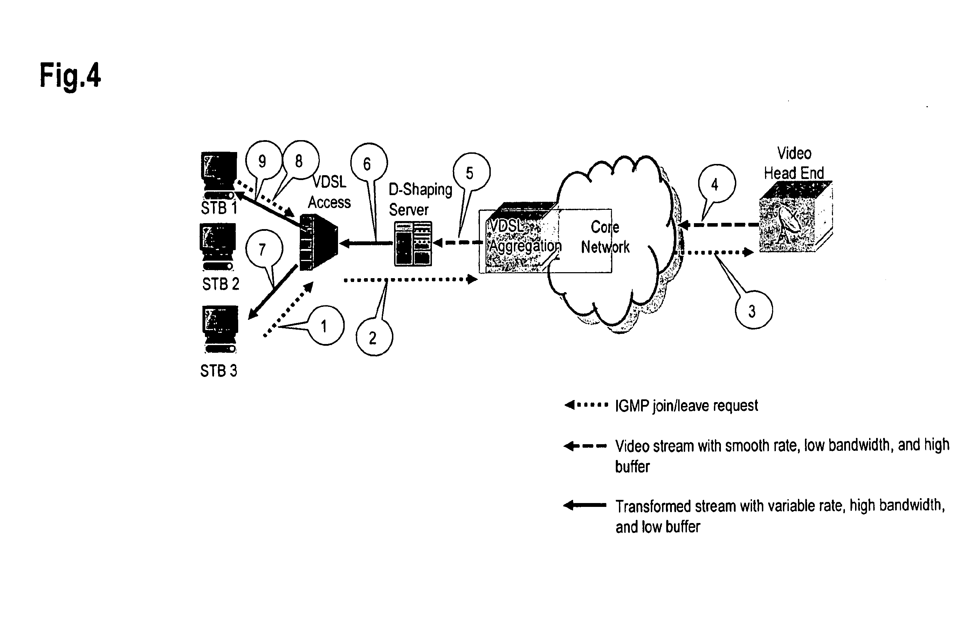

Fig.4 shows an exemplary message flow in a network scenario, wherein a video head end provides streaming data via a core network and a VDSL aggregation to a D-Shaping Server. Said D-Shaping Server may forward a transformed data stream with variable bit rate, high bandwidth and low buffer towards a VDSL access point and further to various set top boxes STB1 to STB3.

In the scenario shown in Fig.4, the multicast stream is only provided by the video head end in case at least one STB requests the stream. If no such request exists, there is no traffic conveyed towards any STB shown.

The following describes the messages depicted in Fig.4:

1-3:      The set top box STB3 sends an IGMP join request 1 for a video channel. Such request 1 is transparently forwarded (see message 2) to the VDSL aggregation and further conveyed (see message 3) to the video head end.

4-6:      A multicast stream 4 (of constant bit rate, CBR) is routed from the video head end to the VDSL aggregation and further (see message 5) to the D-Shaping Server. Said D-Shaping Server transforms said CBR video stream to a variable bit rate (VBR) stream 6 to be forwarded to the VDSL access point. Such VBR stream 6 of the D-Shaping Server is buffered according to the timing information provided by the stream 6.

7: The set top box STB3 receives the VBR stream 7. However, since this is the first time said stream 7 has been requested and since the D-Shaping Server just starts to process the stream 5 there is yet no advantage in terms of channel change time, but also no disadvantage since the buffering in the D-Shaping-Server corresponds to the amount of time the STB would otherwise have buffered the stream.

8: The set top box STB1 requests the channel that is already provided to the set top box STB3.

9: The set top box STB1 receives the transformed stream 9 and is able to substantially immediately switch to this channel requested since the stream 6 and 9 is transformed by the D-Shaping Server such that no buffering time is required.

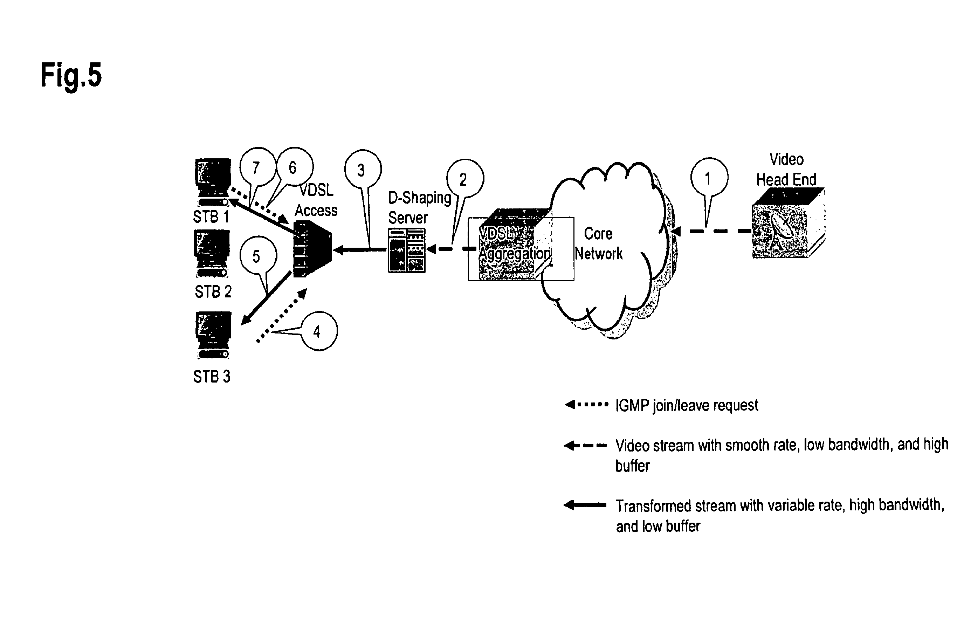

Another exemplary scenario is shown in Fig.5 which is based on the network structure according to Fig. 4. The following describes the messages depicted in Fig. 5:

1-3: The multicast stream 1 belonging to a certain channel is routed (see messages 2 and 3) to the VDSL access point (DSLAM) via the D-Shaping Server that transforms the stream 3 to a variable bit rate according to the bandwidth available over the access network towards the users.

4-5: The set top box STB3 sends a first request 4 for a particular channel to the VDSL access point, which can substantially immediately be provided (see message 5) as such channel has yet been conveyed to the VDSL access point.

6-7: Accordingly, the set top box STB1 launches a request for this channel via message 6 and the video stream is also substantially immediately available at this set top box STB1.

**Claims**

1. A method for processing multimedia data, wherein first multimedia data corresponding to a TV channel is converted into second multimedia data such that a receiving network element of the second multimedia data utilizes a receiver buffering of a reduced duration, comprising the steps:

    - receiving the first multimedia data, the first multimedia data comprising a plurality of data units;
    - buffering the first multimedia data;
    - determining a decoding time for each data unit of said plurality;
    - determining delay parameters based on a model, the model emulating displaying the TV channel and a delay for displaying the channel at the receiving network element;
    - modifying the headers of data units of said plurality based on the determined decoding time and the determined delay parameters and
    - sending the modified data units via an access network to the receiving network element within a time interval according to the determined delay parameters.

2. The method according to claim 1, wherein said first multimedia data and/or second multimedia data comprises:

    - video data;
    - audio data;
    - service data;
    - signaling data.

3. The method according to claim 2, wherein said first multimedia data and/or said second multimedia data is conveyed via a point to multipoint delivery mechanism, in particular via multicast or broadcast.

4. The method according to any of claims 2 or 3, wherein said first multimedia data and/or second multimedia data comprises compressed data, in particular according to a H.26x or MPEG standard.

5. The method according to any of the preceding claims, wherein signaling information of the first multimedia data is converted into signaling information of the second multimedia data.

6. The method according to claim 5, wherein the signaling information of the second multimedia data indicates a higher bit rate than the bit rate of the first multimedia data.

7. The method according to any of the preceding claims, wherein said first multimedia data is received at a constant bit rate and a constant bit rate stream is transformed to a variable bit rate stream according to a bandwidth available over the access network towards receiving network elements.

8. The method according to any of the preceding claims, wherein said second multimedia data is conveyed and/or received at a variable bit rate.

9. The method according to any of the preceding claims, wherein the buffering time at the receiving network element is adjusted via said second multimedia data, in particular via signaling information provided and/or associated with said second multimedia data.

10. The method according to any of the preceding claims, wherein the second multimedia data is conveyed to an access point, in particular to a DSLAM.

11. The method according to any of the preceding claims, wherein the first multimedia data is forwarded to the receiving network element without conversion if the receiving network element is not capable of processing a high or variable bit rate.

12. The method according to any of the preceding claims, wherein the receiving network element is an access point, a user terminal or a set top box.

13. A device for processing multimedia data comprising a processor unit and/or a hard-wired circuit and/or a logic circuit that is arranged such that the method according of any of the preceding claims is executable thereon.

14. The device according to claim 13, wherein said device is or is associated with or comprises a communication device, in particular a network element for adjusting a bit rate for said multimedia data to be conveyed to at least one user.

15. Communication system comprising the device according to any of claims 13 or 14.

**Patentansprüche**

1. Verfahren zur Verarbeitung von Multimediadaten, wobei erste einem Fernsehkanal entsprechende Multimediadaten in zweite Multimediadaten umgewandelt werden, so dass ein Empfangsnetzelement der zweiten Multimediadaten eine Empfängerpufferung verringerter Dauer nutzt, umfassend die Schritte:

   - Empfangen der ersten Multimediadaten, wobei die ersten Multimediadaten eine Vielzahl von Dateneinheiten umfassen;
   - Puffern der ersten Multimediadaten;
   - Bestimmen einer Decodierungszeit für jede Dateneinheit der besagten Vielzahl;
   - Bestimmen von Verzögerungsparametern basierend auf einem Modell, wobei das Modell Anzeigen des Fernsehkanals emuliert, und eine Verzögerung zum Anzeigen des Kanals an dem Empfangsnetzelement;
   - Abändern der Kopfteile der Dateneinheiten der besagten Vielzahl basierend auf der bestimmten Decodierungszeit und den bestimmten Verzögerungsparametern und
   - Senden der abgeänderten Dateneinheiten über ein Zugangsnetz zum Empfangsnetzelement innerhalb eines Zeitabstandes entsprechend den bestimmten Verzögerungsparametern.

2. Verfahren nach Anspruch 1, wobei die besagten ersten Multimediadaten und/oder zweiten Multimediadaten Folgendes umfassen:

   - Videodaten;
   - Audiodaten;
   - Dienstdaten;
   - Signalisierungsdaten.

3. Verfahren nach Anspruch 2, wobei die besagten ersten Multimediadaten und/oder besagten zweiten Multimediadaten über einen Punkt-zu-Mehrpunkt-Abgabemechanismus übermittelt werden, insbesondere über Multicast oder Broadcast.

4. Verfahren nach einem beliebigen der Ansprüche 2 oder 3, wobei die ersten Multimediadaten und/oder zweiten Multimediadaten komprimierte Daten umfassen, insbesondere nach einem H.26x- oder MPEG-Standard.

5. Verfahren nach einem beliebigen der vorhergehenden Ansprüche, wobei Signalisierungsinformationen der ersten Multimediadaten in Signalisierungsinformationen der zweiten Multimediadaten umgewandelt werden.

6. Verfahren nach Anspruch 5, wobei die Signalisierungsinformationen der zweiten Multimediadaten eine höhere Bitrate als die Bitrate der ersten Multimediadaten anzeigen.

7. Verfahren nach einem beliebigen der vorhergehenden Ansprüche, wobei die ersten Multimediadaten mit einer konstanten Bitrate empfangen werden und ein Strom mit konstanter Bitrate in einen Strom mit veränderlicher Bitrate gemäß einer über das Zugangsnetz zu Empfangsnetzelementen verfügbaren Bandbreite umgewandelt wird.

8. Verfahren nach einem beliebigen der vorhergehenden Ansprüche, wobei die besagten zweiten Multimediadaten mit einer veränderlichen Bitrate übermittelt und/oder empfangen werden.

9. Verfahren nach einem beliebigen der vorhergehenden Ansprüche, wobei die Pufferungszeit am Empfangsnetzelement über die zweiten Multimediadaten eingestellt wird, insbesondere über durch die zweiten Multimediadaten bereitgestellte und/oder mit diesen verbundene Signalisierungsinformationen.

**10.** Verfahren nach einem beliebigen der vorhergehenden Ansprüche, wobei die zweiten Multimediadaten zu einem Zugangspunkt übermittelt werden, insbesondere zu einem DSLAM.

**11.** Verfahren nach einem beliebigen der vorhergehenden Ansprüche, wobei die ersten Multimediadaten zum Empfangsnetzelement ohne Umwandlung weitergeleitet werden, wenn das Empfangsnetzelement nicht zum Verarbeiten einer hohen oder veränderlichen Bitrate fähig ist.

**12.** Verfahren nach einem beliebigen der vorhergehenden Ansprüche, wobei das Empfangsnetzelement ein Zugangspunkt, ein Benutzerendgerät oder eine Set Top Box ist.

**13.** Vorrichtung zum Verarbeiten von Multimediadaten, umfassend eine Prozessoreinheit und/oder eine festverdrahtete Schaltung und/oder eine Logikschaltung, die so angeordnet ist, dass das Verfahren gemäß einem beliebigen der vorhergehenden Ansprüche darauf ausführbar ist.

**14.** Vorrichtung nach Anspruch 13, wobei diese Vorrichtung eine Kommunikationsvorrichtung ist oder mit einer Kommunikationsvorrichtung assoziiert ist oder eine Kommunikationsvorrichtung umfasst, insbesondere ein Netzelement zum Einstellen einer Bitrate für die zu mindestens einem Benutzer zu übermittelnden besagten Multimediadaten.

**15.** Kommunikationssystem, umfassend die Vorrichtung nach einem beliebigen der Ansprüche 13 oder 14.

**Revendications**

**1.** Un procédé de traitement de données multimédias, dans lequel des premières données multimédias correspondant à un canal de télévision sont converties en deuxièmes données multimédias de sorte qu'un élément de réseau de réception des deuxièmes données multimédias utilise une mise en mémoire tampon de récepteur d'une durée réduite, comprenant les étapes suivantes :

- la réception des premières données multimédias, les premières données multimédias comprenant une pluralité d'unités de données,
- la mise en mémoire tampon des premières données multimédias,
- la détermination d'une durée de décodage pour chaque unité de données de ladite pluralité,
- la détermination de paramètres de retard en fonction d'un modèle, le modèle émulant l'affichage du canal de télévision et un retard pour l'affichage du canal au niveau de l'élément de réseau de réception,
- la modification des entêtes d'unités de données de ladite pluralité en fonction de la durée de décodage déterminée et des paramètres de retard déterminés, et
- l'envoi des unités de données modifiées par l'intermédiaire d'un réseau d'accès à l'élément de réseau de réception à l'intérieur d'un intervalle temporel selon les paramètres de retard déterminés.

**2.** Le procédé selon la revendication 1, dans lequel lesdites premières données multimédias et/ou deuxièmes données multimédias comprennent :

- des données vidéo,
- des données audio,
- des données de service,
- des données de signalisation.

**3.** Le procédé selon la revendication 2, dans lequel lesdites premières données multimédias et/ou lesdites deuxièmes données multimédias sont acheminées par l'intermédiaire d'un mécanisme de distribution point à multipoint, plus particulièrement par l'intermédiaire d'un mécanisme de multidiffusion ou de radiodiffusion.

**4.** Le procédé selon l'une quelconque des revendications 2 ou 3, dans lequel lesdites premières données multimédias et/ou deuxièmes données multimédias comprennent des données compressées, plus particulièrement selon une norme H.26x ou MPEG.

**5.** Le procédé selon l'une quelconque des revendications précédentes, dans lequel des informations de signalisation des premières données multimédias sont converties en informations de signalisation des deuxièmes données multimédias.

**6.** Le procédé selon la revendication 5, dans lequel les informations de signalisation des deuxièmes données multimédias indiquent un débit binaire plus élevé que le débit binaire des premières données multimédias.

**7.** Le procédé selon l'une quelconque des revendications précédentes, dans lequel lesdites premières données multimédias sont reçues à un débit binaire constant et un flux à débit binaire constant est transformé en un flux à débit binaire variable selon une bande passante disponible sur le réseau d'accès vers des éléments de réseau de réception.

**8.** Le procédé selon l'une quelconque des revendications précédentes, dans lequel lesdites deuxièmes données multimédias sont acheminées et/ou reçues à un débit binaire variable.

9. Le procédé selon l'une quelconque des revendications précédentes, dans lequel la durée de mise en mémoire tampon au niveau de l'élément de réseau de réception est ajustée par l'intermédiaire desdites deuxièmes données multimédias, plus particulièrement par l'intermédiaire d'informations de signalisation fournies et/ou associées auxdites deuxièmes données multimédias.

10. Le procédé selon l'une quelconque des revendications précédentes, dans lequel les deuxièmes données multimédias sont acheminées vers un point d'accès, plus particulièrement vers un DSLAM.

11. Le procédé selon l'une quelconque des revendications précédentes, dans lequel les premières données multimédias sont transmises à l'élément de réseau de réception sans conversion si l'élément de réseau de réception n'est pas en mesure de traiter un débit binaire élevé ou variable.

12. Le procédé selon l'une quelconque des revendications précédentes, dans lequel l'élément de réseau de réception est un point d'accès, un terminal utilisateur ou un décodeur.

13. Un dispositif de traitement de données multimédias comprenant une unité de traitement et/ou un circuit câblé et/ou un circuit logique qui est agencé de sorte que le procédé selon l'une quelconque des revendications précédentes soit exécutable sur celui-ci.

14. Le dispositif selon la revendication 13, dans lequel ledit dispositif est ou est associé à ou comprend un dispositif de communication, plus particulièrement un élément de réseau destiné à ajuster un débit binaire pour lesdites données multimédias à acheminer à au moins un utilisateur.

15. Un système de communication comprenant le dispositif selon l'une quelconque des revendications 13 ou 14.

# Fig.1

111 — ADSL Access

112

103

108   104

113 — VDSL Access   D-Shaping Server

114

115

109   106

D-Shaping Server

116 — GPON Access

117

110   107

ADSL Aggregation

VDSL Aggregation

Core Network

GPON Aggregation

Video Head End   101

102

105

118 Video stream with smooth rate, low bandwidth, and high buffer

119 Transformed stream with variable rate, high bandwidth, and low buffer

EP 2 093 951 B1

**Fig.2**

video stream behavior with bit rate smoothing

video stream behavior without bit rate smoothing

# Fig.3

Elementary Stream Buffer 1    304
303

Elementary Stream Buffer 2    305

Elementary Stream Buffer N    306

307
Muxer

NIC    309

NIC    Demuxer
301    302

"parses information from"

"provides parameters to"

Scheduler

308

**Legend:**

⇨    data flow
NIC    network interface

EP 2 093 951 B1

# Fig.4

EP 2 093 951 B1

◄▪▪▪▪▪ IGMP join/leave request

◄▪▪▪ Video stream with smooth rate, low bandwidth, and high buffer

◄▬▬▬ Transformed stream with variable rate, high bandwidth, and low buffer

# Fig.5

EP 2 093 951 B1

◄······  IGMP join/leave request

◄ ─ ─  Video stream with smooth rate, low bandwidth, and high buffer

◄─────  Transformed stream with variable rate, high bandwidth, and low buffer

**EP 2 093 951 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1670252 A